# EUROPEAN PATENT SPECIFICATION

(11) **EP 3 280 247 B1**
(45) Date of publication and mention of the grant of the patent: **04.12.2019**
(21) Application number: 15716480.7
(22) Date of filing: 09.04.2015
(51) Int. Cl.: A01G 3/02

(54) **SHEARS COMPRISING A FIRST AND A SECOND SHEAR PART**
SCHERE MIT EINEM ERSTEN UND EINEM ZWEITEN SCHERENTEIL
CISAILLES COMPRENANT UNE PREMIÈRE ET UNE SECONDE PARTIE DE CISAILLE

(43) Date of publication of application: 14.02.2018
(60) Divisional application: 19166986.0
(73) Proprietor: Husqvarna AB, 561 82 Huskvarna (SE)
(72) Inventor: ARNDT, Wolfgang, 89079 Ulm (DE); REH, Bernhard, 89150 Laichingen (DE); WANNENWETSCH, Christian, 89182 Bernstadt (DE)
(74) Representative: Finkele, Rolf
(86) International application number: PCT/EP2015/057760
(87) International publication number: WO 2016/162070

(56) References cited:
- DE-A1- 3 426 577
- FR-A5- 2 208 328
- GB-A- 590 646
- GB-A- 621 370
- US-A- 4 633 587
- US-A- 5 367 774

## Description

The invention relates to the field of shears, in particular pruning shears or secateurs.

For cutting purposes, shears usually comprise a first shear part and a second shear part, both shear parts having a cutting blade and a shaft or lever arm which are arranged at opposite sides of a pivot. The pivot connects both first and shear parts with each other in rotatable manner.

Specific shears like pruning shears or secateurs comprise a spring element for providing an opening force to the first and second shear parts in order to bring the shears in an open position for a start of a following cutting movement. From DE 34 26 577 A1 a type of secateurs is known, having a flat spring element which acts upon the first and second shear parts to move the secateurs on to an open position. The flat spring element is fixedly arranged with a first end portion thereof at the first shear part by clamping it between an arrangement of two pins which are positioned laterally offset to one another and an inner surface of a handle. The second end portion of the flat spring is flexible and acts on the second shear part applying a spring force for opening the secateurs.

The secateurs according to DE 34 26 577 A1 are afflicted with the problem of an unsatisfactory fixation. The flat spring element may be twisted or deviated during the opening and closing movement of the shears, or it may even get out of its mounting.

Another type of shears with a flat spring element is described in FR 2 208 328.

In order to overcome such a disadvantage, the invention provides shears, in particular pruning shears or secateurs, according to the technical features of claim 1.

The shears according to the present invention comprise a first shear part and a second shear part, each of the first and second shear parts having a cutting blade and a shaft or lever arm which are arranged at opposite sides of a pivot. The pivot rotatably connects the first and second shear parts with each other, allowing the shears to be moved from an open to a closed position and back to the open position. The shears further comprise a laminated or flat spring element which acts upon the first and second shear parts to move the shears on to their open position so that the operator of the shears only has to perform the closing and therewith the cutting operation. The laminated or flat spring element comprises a first portion fixedly arranged at or allocated to the first shear part and a flexibly arranged second portion acting on the second shear part. In order to firmly fix the laminated or flat spring element and not allowing it to be twisted, deviated or anyway to become misaligned in its mounting, the fixedly arrangement or mounting comprises first supporting means supporting the first portion of the laminated or flat spring element in a first axial direction to prevent a movement towards the pivot as well as second supporting means supporting the first portion of the laminated or flat spring element in radial and/or lateral direction to prevent twisting and/or bending and/or radial and/or lateral movement, in particular in all radial and/or lateral directions, of the first portion.

The first supporting means is an end section of the shaft or lever arm of the first shear part which interacts with an end section of the laminated or flat spring element in the direction of the longitudinal axis of the laminated or flat spring element. The end section of the shaft or lever arm is a front end thereof. The longitudinal axis of the shaft or lever arm may go through such front end, in particular in an orthogonal direction.

One particular embodiment provides an end section of the laminated or flat spring element which is a hook, which hook may be U-shaped. The U-shaped hook may be hooked in a rear side or tail of the shaft or lever arm. However, a drawback of such a solution might be difficulties in substituting a broken laminated or flat spring element. Therefore, another and preferred embodiment is characterized by a bent end section of the laminated or flat spring element. The bending may be realized by an acuate angle, however, in case of a rounded angle the danger of a fracture of the laminated or flat spring element at its angled end section is reduced.

Preferably, the hook is established by forming an at least approximately right angle with the end section of the laminated or flat spring element. A right-angled hook may interact particularly well with a front end of the shaft or lever arm which is in orthogonal alignment with the longitudinal axis of the shaft or lever arm.

In a specific embodiment the second supporting means comprise at least one lateral bearing or contact surface which is oriented parallel to the longitudinal axis of the laminated or flat spring element. In that case, the laminated or flat spring element may lean against the bearing or contact surface, thus being supported firmly.

Preferably, the bearing or contact surface is or comprises a lateral surface of the shaft or lever arm. An additional or alternative bearing or contact surface may be or comprise an inner surface of a handle of the shears, which handle is connectable with or allocated to the shaft or lever arm of the first shear part.

An even better support, in more than only one lateral or radial direction, can be realized with a channel or groove which is arrange at the inner surface of the handle. With the channel or groove partly encasing the first portion of the laminated or flat spring element, a firm fixation nearly all lateral or radial directions is ensured. In the specific case of a U-shaped groove, movement in only one lateral or radial direction is enabled. This final direction for lateral or radial movement, however, can be removed when the opening of the U-shaped groove is covered by the lateral surface of the shaft or lever arm.

In case of a firm fixation of the laminated or flat spring element by the first and second supporting means, an operator of the shears may perceive a high quality of this tool. In addition, such firm fixation does not provide any tolerance for the laminated or flat spring element with the effect of a gradually loosening of the fastening.

In order also to prevent a movement of the laminated or flat spring element in a direction away from the pivot, third supporting means may be provided which support the laminated or flat spring element in axial direction opposite to the effective direction of the first supporting means.

In a preferred embodiment the third supporting means comprise an end wall of the channel or groove arranged at the inner surface of the handle. The end wall of the channel or groove may be positioned in close proximity to the front end or tail of the shaft or lever arm, just keeping a space for reception of the hook at the laminated or flat spring element.

Alternatively, in particular in the case of high axial forces acting on the laminated or flat spring element, the axial movement in both directions, both towards and away from the pivot, may be prevented with the hook at the end section of the laminated or flat spring element threaded in a hole or bore arranged at the end section of the shaft or lever arm. Such a solution is particularly advantageous in the case of a preferred application using a metallic shaft or lever arm in combination with a metallic laminated or flat spring element.

The invention will be described more fully in detail hereinafter with reference to the accompanying drawings, in which
- Fig. 1: is a side view of a secateurs in a closed condition;
- Fig. 2: the secateurs of Fig. 1 in a view from above;
- Fig. 3: the secateurs of Fig. 1 in a sectional view along the line A - A according to Fig. 2;
- Fig. 4: the secateurs of Fig. 1 in a front perspective view with a flat spring in an exploded view;
- Fig. 5: the secateurs of Fig. 1 in a rear perspective view with removed handles; and
- Fig. 6: the secateurs of Fig. 1 in the sectional view of Fig. 3, but in an open position.

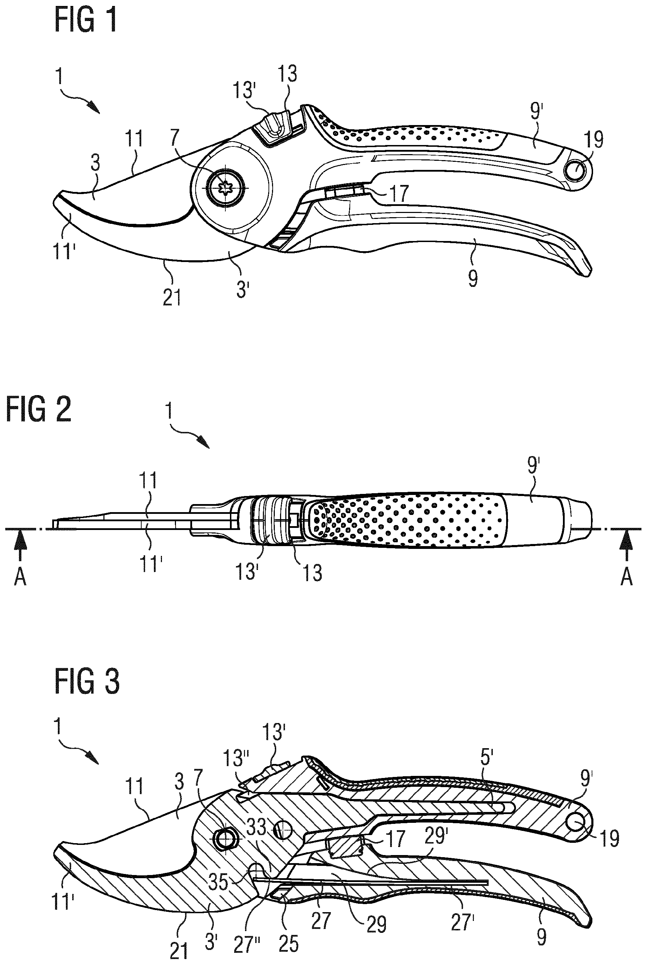

Secateurs 1 as shown in particular in Fig. 1 are composed of a first and a second shear part 3, 3' which are made of metal and are connected to each other by means of a pivot 7 being e. g. a screw and a respective screw nut or the like. Each of the first and second shear parts 3, 3' comprise a lever arm 5, 5', each thereof being assembled with a handle 9, 9' made of plastics or rubber for grasping and operating the secateurs 1, and a cutting blade 11, 11', both lever arms 5, 5' and cutting blades 11, 11' are arranged on opposite sides related to the pivot 7.

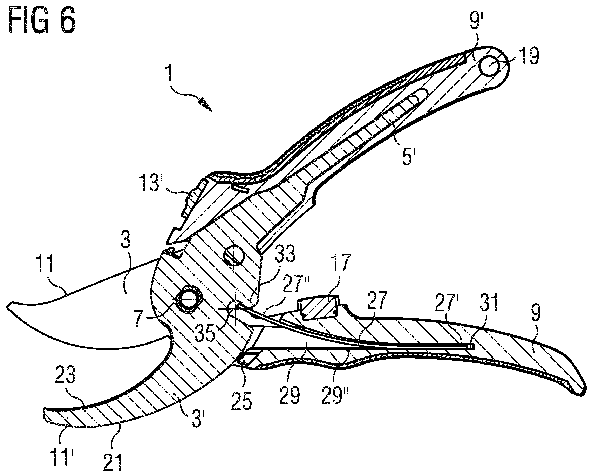

In order to savely retain or convey the secateurs 1, they may be set in an idle or closed position as illustrated with Figs. 1 to 5. In order to secure the idle or closed position, an interlocking element 13 is arranged at the handle 9' of the second shear part 3' which is movable in a longitudinal direction of the handle 9'. The interlocking element 13 is composed of a manipulator for shifting 13' and a latch 13", the latter one interacting with a notch 15 arranged at the lever arm 5 of the first shear part 3 when the secateurs 1 are in the idle or closed position. Moving the interlocking element 13 in the opposite longitudinal direction with removing the latch 13" from the notch 15 causes the secateurs 1 to pass on to their open or operational postion as illustrated with Fig. 6. As being best illustrated with Fig. 3, when the secateurs 1 are closed again and a cutting operation is executed, a first stopper element 17 pressed into a pocket arranged in the lower handle 9 of the first shear part 3 is provided, with the handle 9' of the second shear part 3' striking against the top side of the stopper element 17 thereby defining the stop of the cutting operation. At an end portion of handle 9' of the second shear part 3' an eyelet 19 is provided for allowing a hanging and storing of the secateurs 1, e.g. at a wall hook.

A cutting operation with the secateurs 1 is usually started when the secateurs 1 are in an open position, in particular in a fully open position as illustrated with Fig. 6, by pivoting the first and second shear parts 3, 3' which are connected by the pivot 7. The operator performs a closing movement via the handles 9, 9' onto the cutting blades 11, 11' using the leverage effect for operating a high cutting force. The fully open position is defined by a bottom side 21 of the cutting blade 11' of the second shear part 3' striking against a second stopper element being a protrusion 25 arranged at the handle 9 of the first shear part 3. Said bottom side 21 faces the cutting edge 23 of the cutting blade 11' of the second shear part 3'.

The open position for starting the cutting operation is reached by means of an opening force generated by a spring element which may be a flat spring element 27, as illustrated with Figs. 3 to 6. The flat spring element 27 is arranged at the handle 9 of the first shear part 3 and fixed in radial and/or lateral directions at a first portion 27' of the flat spring element 27 by a respective groove 31 provided at an inner surface of the handle 9. A second portion 27" of the flat spring element 27, adjacent to the first end portion 27', is in a flexible arrangement in order to perform the spring force onto the second shear part 3', thereby passing through a spring excursion which is defined by the range between the open and the closed position. In order the flat spring element 27 to perform the excursion, a respective space or clearance 29 is provided at handle 9.

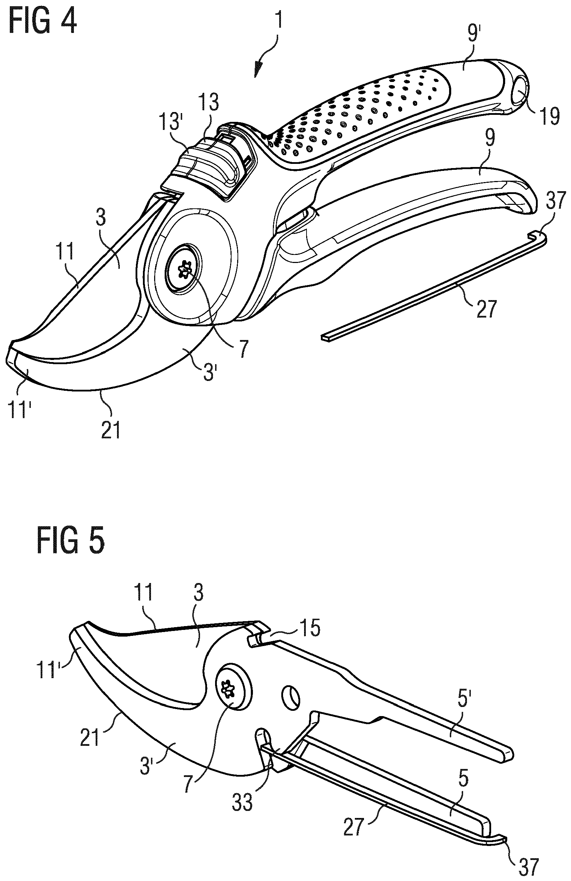

Fig. 6 illustrates the flat spring element 27 in its nearly unstressed state which is obtained in the fully open position of the secateurs 1. In this respect, although the flat spring element 27 is shown with a rectilinear illustration, the exploided view of Fig. 4 reflects the flat spring element 27 in its stressed state, which in particular is taken when secateurs 1 are in their closed position. In the unstressed position, the flat spring element 27 adopts a bent shape having a big and constant radius (see Fig. 6). As can be understood from Fig. 6, the first portion 27' of the flat spring element 27 which is arranged in the groove 31 is shown with a rectlilinear arrangement in order to fit into the rectilinear groove 31, however, when disassembled from the groove 31 the first portion 27' of the flat spring element 27 follows the radius of curvature of the second portion 27". When mounted in the groove 31, the straightened first portion 27' thus performs a clamping force onto the groove limitations or walls, thereby supporting a fixing and keeping in position of the flat spring element 27.

The flat spring elelemt 27 is fixed in radial and/or lateral directions by means of the groove 31 and, at the open groove side, by means of the lateral surface of the lever arm 5. The arrangement of groove 31 and lever arm 5 establishs a space for the first portion 27' of the flat spring elelemt 27 without any clearance in order to secure firm positioning with preventing twisting or movement of the flat spring elelemt 27 in radial and/or lateral directions.

The flat spring elelemt 27 is also secured against movement in a first axial direction towards the pivot 7. To this end, an end section of the flat spring element 27 being also an end section of its first portion 27' is bent over a rounded corner, thereby constituting a hook 37 angled under a right angle. The hook 37 abuts a tail of lever arm 5 preventing a movement in the first axial direction.

Finally, the flat spring elelemt 27 is also secured in a second axial direction away from pivot 7 which movement is limited by an end wall of the groove 31 positioned in close proximity to the tail of the lever arm 5, just keeping a space for reception of the hook 37.

The flat spring element 27 is arranged at the secateurs 1 in removable and exchangeable way, so that the operator can substitue it when it is broken. The assembling of the flat spring element 27 is executed as indicated with Figs. 4 to 6. Initially, flat spring element 27 is separated from the secateurs 1 as illustrated with Fig. 4, however, as already described, Fig. 4 shows the flat spring element 27 in straightened state. As indicated with Fig. 5, the flat spring element 27 is then attached to the lever arm 5 of the first shear part 3, with at least its first end portion 27' being oriented parallel to the axis of lever arm 5. After such arrangement, handle 9 is slid on the joining of lever arm 5 and flat spring element 27 ahead with its open end which is positioned ahead the space or clearance 29, i. e. handle 9 is moved from the end portion of lever arm 5 alongside the lever arm 5 until the handle 9 reaches its final position. The hook 37 encompassing the tail of lever arm 5 guarantees that flat spring element 27 is kept in place and not moved with the handle 9 while the latter one is slid on lever arm 5. With such assembly, the flat spring element 27 is also firmly fixed since the flat spring element 27 is guided into the groove 31 at handle 9'.

The lever arm 5' of the second shear part 3' is shaped by providing a fulcrum 33 which is located in close distance to the pivot 7. The second end portion 27" of the flat spring element 27 is constantly pressing against fulcrum 33 so as to perform the spring force onto the second shear part 3' for opening the secateurs 1. Fulcrum 33 is designed by a rounded contact surface for smoothly contacting the second end portion 27" of the flat spring element 27. While the secateurs 1 merely open under an angle of about 40°, the surface of the fulcrum 33 directed to the flat spring element 27 is shaped by a turn of about 65° passing over into a recess establishing a pocket 35 into which the second end portion 27" of the flat spring element 27 extends when the secateurs 1 are in their open position (see Fig. 6).

The pocket 35 is filled with a lubricant (not shown) in particular with grease. The construction of the secateurs 1 and their pocket 35 is designed such that the operator of the secateurs 1 is enabled to refill the pocket 35 with lubricant. During the opening movement of the secateurs 1 from their closed position (see Fig. 3) to the open position (see Fig. 6) the end portion of flat spring element 27 arranged opposite to the the end section forming the hook 37 is dunking into the lubricant thereby lubricating the flat spring element 27 at its contacting surface with fulcrum 33. The lubricant may directly flow to the contacting area or it may by driven from the pocket 35 to the contacting area by low interfacial surface tension between lubricant and the surface of the flat spring element 27.

### List of reference numerals

- 1: secateurs
- 3, 3': first and second shear parts
- 5, 5': lever arms
- 7: pivot
- 9, 9': handles
- 11, 11': cutting blades
- 13: interlocking element
- 13': manipulator
- 13": latch
- 15: notch
- 17: hexagon head screw
- 19: eyelet
- 21: bottom side
- 23: cutting edge
- 25: protrusion
- 27: flat spring element
- 27', 27": first and second portions of flat spring element
- 29: clearance
- 29', 29": clearance sides
- 31: groove
- 33: fulcrum
- 35: pocket
- 37: hook

## Claims

1. Shears, comprising a first shear part (3) and a second shear part (3'), each of the first and second shear parts (3, 3') having a cutting blade (11, 11') and a shaft or lever arm (5, 5') which are arranged at opposite sides of a pivot (7),
wherein the lever arms (5, 5') are assembled with handles (9, 9') made of plastics or rubber,
the pivot (7) rotatably connecting the first and second shear parts (3, 3') with each other, the shears further comprising a laminated or flat spring element (27) acting upon the first and second shear parts (3, 3') to move the shears on to an open position, the laminated or flat spring element (27) comprising a first portion (27') fixedly arranged at or allocated to the first shear part (3) and a flexibly arranged second portion (27") acting on the second shear part (3'), wherein first supporting means (37) are provided supporting the laminated or flat spring element (27) in a first axial direction to prevent a movement of the laminated or flat spring element (27) towards the pivot (7) and wherein second supporting means are provided supporting the first portion (27') of the laminated or flat spring element (27) in radial and/or lateral directions to prevent twisting and/or bending and/or radial and/or lateral movement of the first portion (27'),
wherein the first supporting means comprise an end section of the shaft or lever arm (5) of the first shear part (3) and an end section of the laminated or flat spring element (27) interacting in the direction of the longitudinal axis of the laminated or flat spring element (27), **characterized in that**,
the first supporting means (37) is arranged at a front end of associated lever arm (5) as well as with the handle (9) of the associated lever arm (7), with the handle having a groove (31) provided at its inner surface.

2. Shears according to claim 1, wherein the end section of the laminated or flat spring element (27) is a hook.

3. Shears according to claim 1, wherein the end section of the laminated or flat spring element (27) is bent.

4. Shears according to claim 3, wherein the end section of the laminated or flat spring element (27) is bent over a rounded angle.

5. Shears according to claim 3 or 4, wherein the end section of the laminated or flat spring element (27) forms at least approximately a right angle.

6. Shears according to any of the claims 1 to 5, wherein the second supporting means comprise at least one lateral bearing or contact surface, the surface having an orientation parallel to the longitudinal axis of the laminated or flat spring element (27).

7. Shears according to claim 6, wherein the lateral bearing or contact surface is or comprises a lateral surface of the shaft or lever arm (5).

8. Shears according to claim 6 or 7, wherein the lateral bearing or contact surface is or comprises an inner surface of a handle (9), which handle (9) is connectable with or allocated to the shaft or lever arm (5) of the first shear part (3).

9. Shears according to claim 8, wherein a channel or groove (31) is arranged at the inner surface of the handle (9), the channel or groove (31) at least partly encasing the first portion (27') of the laminated or flat spring element (27).

10. Shears according to any of the claims 1 to 9, wherein the first and second supporting means firmly fix the laminated or flat spring element (27).

11. Shears according to any of the claims 1 to 10, wherein third supporting means are provided supporting the laminated or flat spring element (27) in a second axial direction to prevent a movement of the laminated or flat spring element (27) away from the pivot (7).

12. Shears according to claim 11, wherein the third supporting means are or comprise an end wall of a channel or groove (31) arranged at the inner surface of a handle (9) which handle (9) is connectable with or allocated to the shaft or lever arm (5) of the first shear part (3).

13. Method to assemble a handle (9) to a lever arm (5) fitted with the flat spring element (27) in shears according to anyone of claims 2 or claims 6-12 in combination with claim 2, wherein the flat spring element (27) is attached to the lever arm (5) of the first shear part (3), with at least the flat spring element's end portion (27') being oriented parallel to the axis of the lever arm (5) and by the hook formed on it being attached to the end portion of the lever arm (5),
whereby in the following the handle (9) is slid on the joining of lever arm (5) and flat spring element (27) ahead with its open end which is positioned ahead a space or clearance (29) until the handle (9) reaches its final position,
thereby guiding the flat spring element (27) in the groove (31) of the handle (9).

## Patentansprüche

1. Schere, umfassend ein erstes Scherenteil (3) und ein zweites Scherenteil (3'), wobei jedes der ersten und zweiten Scherenteile (3, 3') ein Schneidmesser (11, 11') und einen Schaft oder Hebelarm (5, 5') aufweist, die an gegenüberliegenden Seiten eines Drehpunktes (7) angeordnet sind,
wobei die Hebelarme (5, 5') mit Griffen (9, 9') aus Kunststoff oder Gummi ausgestattet sind,
wobei der Drehpunkt (7) die ersten und zweiten Scherteile (3, 3') drehbar miteinander verbindet, wobei die Schere ferner ein geschichtetes oder flaches Federelement (27) umfasst, das auf die ersten und zweiten Scherteile (3, 3') einwirkt, um die Schere in eine offene Position zu bewegen, das geschichtete oder flache Federelement (27) einen ersten Abschnitt (27'), der fest am ersten Scherteil (3) angeordnet oder diesem zugeordnet ist und einen flexibel angeordneten zweiten Abschnitt (27") umfasst, der auf den zweiten Scherteil (3') wirkt, wobei erste Stützmittel (37) bereitgestellt sind, die das geschichtete oder flache Federelement (27) in einer ersten axialen Richtung stützen, um eine Bewegung des geschichteten oder flachen Federelements (27) in Richtung des Drehpunktes (7) zu verhindern, und wobei zweite Stützmittel bereitgestellt sind, die den ersten Abschnitt (27') des geschichteten oder flachen Federelements (27) in radialer und/oder lateraler Richtung stützen, um Verdrehen und/oder Biegen und/oder radiale und/oder laterale Bewegung des ersten Abschnitts (27') zu verhindern,
wobei die ersten Stützmittel einen Endabschnitt des Schaftes oder Hebelarms (5) des ersten Scherenteils (3) und einen Endabschnitt des geschichteten oder flachen Federelements (27) umfassen, der in Richtung der Längsachse des geschichteten oder flachen Federelements (27) einwirkt,
**dadurch gekennzeichnet, dass**
das erste Stützmittel (37) sowohl an einem vorderen Ende des zugehörigen Hebelarms (5) als auch am Griff (9) des zugehörigen Hebelarms (7) angeordnet ist, wobei der Griff eine an seiner Innenfläche ausgebildete Nut (31) aufweist.

2. Schere nach Anspruch 1, wobei der Endabschnitt des geschichteten oder flachen Federelements (27) ein Haken ist.

3. Schere nach Anspruch 1, wobei der Endabschnitt des geschichteten oder flachen Federelements (27) gebogen ist.

4. Schere nach Anspruch 3, wobei der Endabschnitt des geschichteten oder flachen Federelements (27) um einen abgerundeten Winkel gebogen ist.

5. Schere nach Anspruch 3 oder 4, wobei der Endabschnitt des geschichteten oder flachen Federelements (27) mindestens annähernd einen rechten Winkel bildet.

6. Schere nach einem der Ansprüche 1 bis 5, wobei das zweite Stützmittel mindestens eine seitliche Lager- oder Kontaktfläche umfasst, wobei die Oberfläche eine Ausrichtung parallel zur Längsachse des geschichteten oder flachen Federelements (27) aufweist.

7. Schere nach Anspruch 6, wobei die seitliche Lager- oder Kontaktfläche eine Seitenfläche des Schaftes oder Hebelarms (5) ist oder umfasst.

8. Schere nach Anspruch 6 oder 7, wobei die seitliche Lager- oder Kontaktfläche eine Innenfläche eines Griffs (9) ist oder umfasst, wobei der Griff (9) mit dem Schaft oder Hebelarm (5) des ersten Scherenteils (3) verbindbar oder diesem zugeordnet ist.

9. Schere nach Anspruch 8, wobei ein Kanal oder eine Nut (31) an der Innenfläche des Griffs (9) angeordnet ist, wobei der Kanal oder die Nut (31) den ersten Abschnitt (27') des geschichteten oder flachen Federelements (27) zumindest teilweise umschließt.

10. Schere nach einem der Ansprüche 1 bis 9, wobei die ersten und zweiten Stützmittel das geschichtete oder flache Federelement (27) fest fixieren.

11. Schere nach einem der Ansprüche 1 bis 10, wobei dritte Stützmittel bereitgestellt sind, die das geschichtete oder flache Federelement (27) in einer zweiten axialen Richtung stützen, um eine Bewegung des geschichteten oder flachen Federelements (27) von dem Drehpunkt (7) weg zu verhindern.

12. Schere nach Anspruch 11, wobei die dritten Stützmittel eine Endwand eines Kanals oder einer Nut (31) sind oder umfassen, die an der Innenfläche eines Griffs (9) angeordnet ist, wobei der Griff (9) mit dem Schaft oder Hebelarm (5) des ersten Scherenteils (3) verbindbar oder diesem zugeordnet ist.

13. Verfahren zum Anbringen eines Griffs (9) an einen Hebelarm (5), der an das flache Federelement (27) in einer Schere nach einem der Ansprüche 2 oder Ansprüche 6-12 in Kombination mit Anspruch 2 angebracht ist,
wobei das flache Federelement (27) am Hebelarm (5) des ersten Scherenteils (3) befestigt ist, wobei mindestens der Endabschnitt (27') des flachen Federelements parallel zur Achse des Hebelarms (5) ausgerichtet ist und durch den daran ausgebildeten Haken an dem Endabschnitt des Hebelarms (5) befestigt ist,
wobei nachfolgend der Griff (9) auf der Verbindung von Hebelarm (5) und flachem Federelement (27) mit seinem offenen Ende, das vor einem Zwischenraum oder Abstand (29) positioniert ist, vorgeschoben wird, bis der Griff (9) seine Endposition erreicht,
wodurch das flache Federelement (27) in der Nut (31) des Griffs (9) geführt wird.

## Revendications

1. Cisailles, comprenant une première partie de cisaille (3) et une seconde partie de cisaille (3'), chacune des première et seconde parties de cisaille (3, 3') présentant une lame coupante (11, 11') et un arbre ou bras levier (5, 5') qui sont disposés sur des côtés opposés d'un pivot (7),
dans lequel les bras leviers (5, 5') sont montés avec des manches (9, 9') réalisés en plastique ou caoutchouc,
le pivot (7) raccordant avec faculté de rotation les première et seconde parties de cisaille (3, 3') l'une à l'autre, les cisailles comprenant en outre un élément ressort à lames ou plat (27) agissant sur les première et seconde parties de cisaille (3, 3') pour déplacer les cisailles vers une position ouverte, l'élément ressort à lames ou plat (27) comprenant une première partie (27') disposée de manière fixe au niveau de la première partie de cisaille (3) ou assignée à celle-ci et une seconde partie (27") disposée de manière flexible agissant sur la seconde partie de cisaille (3'), dans lequel des premiers moyens de support (37) sont fournis pour supporter l'élément ressort à lames ou plat (27) dans un premier sens axial pour empêcher un déplacement de l'élément ressort à lames ou plat (27) vers le pivot (7) et dans lequel des deuxièmes moyens de support sont fournis pour supporter la première partie (27') de l'élément ressort à lames ou plat (27) dans des sens radial et/ou latéral pour empêcher un mouvement de torsion et/ou de cintrage et/ou radial et/ou latéral de la première partie (27'),
dans lequel les premiers moyens de support comprennent une section d'extrémité de l'arbre ou bras levier (5) de la première partie de cisaille (3) et une section d'extrémité de l'élément ressort à lames ou plat (27) interagissant dans le sens de l'axe longitudinal de l'élément ressort à lames ou plat (27),
**caractérisé en ce que**,
les premiers moyens de support (37) sont disposés au niveau d'une extrémité avant d'un bras levier associé (5) ainsi qu'avec le manche (9) du bras levier associé (7), le manche présentant une rainure (31) ménagée au niveau de sa surface interne.

2. Cisailles selon la revendication 1, dans lesquelles la section d'extrémité de l'élément ressort à lames ou plat (27) est un crochet.

3. Cisailles selon la revendication 1, dans lesquelles la section d'extrémité de l'élément ressort à lames ou plat (27) est cintrée.

4. Cisailles selon la revendication 3, dans lesquelles la section d'extrémité de l'élément ressort à lames ou plat (27) est cintrée sur un angle arrondi.

5. Cisailles selon la revendication 3 or 4, dans lesquelles la section d'extrémité de l'élément ressort à lames ou plat (27) forme au moins approximativement un angle droit.

6. Cisailles selon l'une quelconque des revendications 1 à 5, dans lesquelles les deuxièmes moyens de support comprennent au moins une surface porteuse ou de contact latérale, la surface ayant une orientation parallèle à l'axe longitudinal de l'élément ressort à lames ou plat (27).

7. Cisailles selon la revendication 6, dans lesquelles la surface porteuse ou de contact latérale est ou comprend une surface latérale de l'arbre ou bras levier (5).

8. Cisailles selon la revendication 6 or 7, dans lesquelles la surface porteuse ou de contact latérale est ou comprend une surface interne d'un manche (9), lequel manche (9) peut être raccordé à l'arbre ou bras levier (5) de la première partie de cisaille (3) ou assigné à celui-ci.

9. Cisailles selon la revendication 8, dans lesquelles une gorge ou rainure (31) est disposée au niveau de la surface interne du manche (9), la gorge ou rainure (31) enfermant au moins partiellement la première partie (27') de l'élément ressort à lames ou plat (27).

10. Cisailles selon l'une quelconque des revendications 1 à 9, dans lesquelles les premiers et deuxièmes moyens de support fixent fermement l'élément ressort à lames ou plat (27).

11. Cisailles selon l'une quelconque des revendications 1 à 10, dans lesquelles des troisièmes moyens de support sont fournis pour supporter l'élément ressort à lames ou plat (27) dans un second sens axial pour empêcher un écartement de l'élément ressort à lames ou plat (27) par rapport au pivot (7).

12. Cisailles selon la revendication 11, dans lesquelles les troisièmes moyens de support sont ou comprennent une paroi d'extrémité d'une gorge ou rainure (31) disposée au niveau de la surface interne d'un manche (9) lequel manche (9) peut être raccordé à l'arbre ou bras levier (5) de la première partie de cisaille (3) ou assigné à celui-ci.

13. Procédé de montage d'un manche (9) sur un bras levier (5) doté de l'élément ressort plat (27) dans des cisailles selon l'une quelconque de la revendication 2 ou des revendications 6 à 12 en combinaison avec la revendication 2,
dans lequel l'élément ressort plat (27) est attaché au bras levier (5) de la première partie de cisaille (3), au moins la partie d'extrémité (27') de l'élément ressort plat étant orientée parallèlement à l'axe du bras levier (5) et par le crochet formé sur celui-ci étant attachée à la partie d'extrémité du bras levier (5),
moyennant quoi le manche (9) est ensuite coulissé sur la jonction du bras de levier (5) et de l'élément ressort plat (27) vers l'avant avec son extrémité ouverte qui est positionnée vers l'avant d'un espace ou d'un dégagement (29) jusqu'à ce que le manche (9) atteigne sa position finale,
guidant ainsi l'élément ressort plat (27) dans la rainure (31) du manche (9).
